Europäisches Patentamt

European Patent Office

Office européen des brevets

(11) Veröffentlichungsnummer: **0 275 068 B1**

(12) **EUROPÄISCHE PATENTSCHRIFT**

(45) Veröffentlichungstag der Patentschrift: **29.07.92**

(21) Anmeldenummer: **88100265.3**

(22) Anmeldetag: **11.01.88**

(51) Int. Cl.⁵: **G02F 1/09**, G02B 6/26

(54) **Rückwirkungsfreie optische Anordnung zum Umwandeln der von einem Halbleiterlaser divergent abgestrahlten polarisierten Laserstrahlung in eine konvergente Strahlung.**

(30) Priorität: **14.01.87 DE 3700897**

(43) Veröffentlichungstag der Anmeldung:
**20.07.88 Patentblatt 88/29**

(45) Bekanntmachung des Hinweises auf die
Patenterteilung:
**29.07.92 Patentblatt 92/31**

(84) Benannte Vertragsstaaten:
**DE FR GB IT SE**

(56) Entgegenhaltungen:
**EP-A- 0 202 709**
**DE-A- 2 003 397**

**JOURNAL OF LIGHTWAVE TECHNOLOGY,**
**Band LT-1, Nr. 1, 1. März 1983, Seiten**
**121-130; T. SUGIE et al.:"An effective nonre-**
**ciprocal circuit for semiconductor laser-**
**to-optical-fiber coupling using a YIG sphere"**

**SIEMENS FORSCHUNGS- UND ENTWICK-**
**LUNGSBERICHTE, Band 13, Nr. 6, 1984, Sei-**
**ten 284-288, Würzburg; R. KEIL et al.:**
**"Coupling between semiconductor laser**
**diodes and single-mode optical fibers"**

**ELECTRONICS LETTERS, Band 18, Nr. 24,**
**1982, Seiten 1026-1028, London, GB; T. SUGIE**
**et al.: "Nonreciprocal circuit for laser-**
**diode-to-single-mode-fibre coupling employ-**
**ing a YIG sphere"**

**PATENT ABSTRACTS OF JAPAN, Band 11,**
**Nr. 19 (P-537)[2466], 20. Januar 1987; & JP - A**
**- 61 193 118**

(73) Patentinhaber: **SIEMENS AKTIENGESELL-**
**SCHAFT**
**Wittelsbacherplatz 2**
**W-8000 München 2(DE)**

(72) Erfinder: **Drögemüller, Karsten, Dipl.-Ing.**
**Alfred-Neumann-Anger 11**
**W-8000 München 83(DE)**
Erfinder: **Mayerhofer, Franz**
**Primelstrasse 34**
**W-8039 Puchheim(DE)**
Erfinder: **Klement, Ekkehard, Dr.**
**Leharstrasse 7**
**W-8000 München 60(DE)**
Erfinder: **Deserno, Ulrich, Dr.**
**Augustenstrasse 121**
**W-8000 München 40(DE)**

# Beschreibung

Die Erfindung betrifft eine rückwirkungsfreie optische AnOrdnung zum Umwandeln der von einem Halbleiterlaser divergent abgestrahlten polarisierten Laserstrahlung in eine weniger oder nicht divergente Strahlung, insbesondere in eine konvergente Strahlung zum rückwirkungsfreien Einkoppeln der Laserstrahlung in eine Monomodefaser nach dem Oberbegriff des Patentanspruchs 1.

Eine Anordnung der genannten Art ist aus IEEE J. of Lightwave Techn., Vol. LT-1, No. 1, S. 121-130, März 1983 bekannt. Bei - dieser Anordnung besteht die erste Linse aus einer Kugellinse aus Yttrium-Eisen-Granat (englisch YIG). Der Faradaydreher dieser Anordnung besteht aus dieser ersten Kugellinse und aus einem diese Linse umgebenden Ringmagneten. Die zweite Linse besteht aus einer stabförmigen Gradientenindexlinse mit senkrecht zur Ausbreitungsrichtung der Laserstrahlung angeordneten Endflächen. Der Polarisator ist in Ausbreitungsrichtung der Laserstrahlung hinter der zweiten Linse im konvergenten Bereich dieser Strahlung angeordnet, die danach beispielsweise in eine Monomodefaser einkoppelbar ist.

Diese bekannte Anordnung hat gegenüber anderen bekannten rückwirkungsfreien Anordnungen (siehe IEEE J. of Lightwave Techn., Vol. LT-4, No. 2, Febr. 1986; Conf. on Opt. Fiber Communications (OFC) '85, San Diego, CA, pap PD 13-1, 1985 und Conf. on Opt., Fiber Communication (OFC) '86, Atlanta, ME 4, 1986), bei denen der Faradaydreher zwischen der kugelförmigen ersten Linse und der zweiten Linse in Form einer Gradientenlinse oder Kugellinse angeordnet ist und aus einer schräg zur Ausbreitungsrichtung der Laserstrahlung angeordneten Scheibe aus YIG innerhalb eines Ringmagneten besteht, den Vorteil, daß ein Element eingespart wird.

Derartige rückwirkungsfreie Anordnungen sind für die optische Nachrichtentechnik erforderlich, bei welcher Halbleiterlaser zunehmend an Bedeutung gewinnen. Aufgrund ihrer hervorragenden Modulationseigenschaften sind Übertragungsgeschwindigkeiten bis in den Gigabitbereich möglich. Derart leistungsstarke Übertragungssysteme stellen hohe Anforderungen an die Stabilität der Betriebseigenschaften des Halbleiterlasers.

In Richtung des Halbleiterlasers zurückstrahlende Strahlung, beispielsweise in oder außerhalb der Anordnung reflektierte Laserstrahlung, stört die Betriebseigenschaften des Lasers in unerwünschter Weise, wenn sie nicht vorher abgeblockt, sondern in diesen rückgekoppelt wird. Insbesondere führt eine solche zurückstrahlende Strahlung zu Schwankungen des Spektrums, der Linienbreite und des Eigenrauschens des Lasers (siehe IEEE J. Quantum Electron., Vol QE-16, S. 347-355, 1980; IEEE J. Quantum Electron., Vol. QE-18, S. 543-555, 1982 und Appl. Phys. Lett., Vol. 445, No. 6, S. 597-599, 1984).

Durch die oben beschriebenen rückwirkungsfreien Anordnungen läßt sich die Rückwirkung der zurückstrahlenden Strahlung auf den Halbleiterlaser weitgehend unterdrücken.

Aufgabe der Erfindung ist es, eine weniger Elemente als die anderen bekannten Anordnungen aufweisende Anordnung der eingangs genannten Art anzugeben, bei der im Vergleich zur bekannten Anordnung der eingangs genannten Art ein höherer Einkoppelwirkungsgrad und eine höhere Sperrdämpfung erzielt werden kann.

Diese Aufgabe wird durch die im kennzeichnenden Teil des Patentanspruchs 1 angegebenen Merkmale gelöst.

Diese Lösung beruht auf der Erkenntnis, daß bei der bekannten Anordnung der eingangs genannten Art die Abmaße der ersten Kugellinse aus YIG für einen hohen Einkoppelwirkungsgrad nicht günstig sind. Durch die starke Krümmung der Kugel ergeben sich unterschiedliche optische Weglängen im YIG oder anderen Ferrit, die zu einer Verschlechterung der Sperrdämpfung führen. Die Sperrdämpfung gibt an, in welchem Maß die zurückstrahlende Strahlung vom optischen Isolator gesperrt wird. Bei der erfindungsgemäßen Anordnung können dagegen ein Radius und die Brechzahl der ersten Linse so gewählt werden, daß ein möglichst hoher Einkoppelwirkungsgrad bei geringer Rückwirkung der dem Halbleiterlaser zugekehrten Kugelfläche erzielt wird. Das ist bei der bekannten Anordnung der eingangs genannten Art für die Kugellinse aus YIG nicht möglich.

Bei der bekannten Anordnung der eingangs genannten Art muß der Halbleiterlaser innerhalb des Ringmagneten hochpräzise vor der ersten Linse positioniert werden. Dies ist bei der erfindungsgemäßen Anordnung nicht erforderlich. Die Montage dieser Anordnung wird dadurch erheblich erleichtert.

Vorteilhafterweise besteht gemäß Anspruch 2 die zweite Linse aus einer Plankonvexlinse, deren gewölbte Seite dem Halbleiterlaser zugekehrt ist. Bei dieser Ausgestaltung kann die Brennweite der zweiten Linse und damit das Brennweitenverhältnis beider Linsen über den Krümmungsradius der Plankonvexlinse eingestellt werden. Unabhängig von der Brennweite der Plankonvexlinse kann ihre Dicke so bemessen werden, daß in dieser Linse eine 45°-Faradaydrehung stattfindet. Die Plankonvexlinse übernimmt neben der Abbildung des Laserstrahls gleichzeitig die Funktion des Faradaydrehers. Damit ist gegenüber der anderen bekannten Anordnung mit der YIG-Scheibe ein Element eingespart, ohne daß eine Einbuße an Einkoppelwirkungsgrad hingenommen werden muß.

Die Rückwirkung der Plankonvexlinse ist wegen der Krümmung dieser Linse erheblich geringer als bei einer YIG-Scheibe. Ein Verkanten oder Schrägstellen der Plankonvexlinse und der damit verbundene Montageaufwand kann deshalb entfallen.

Eine Verschlechterung der Sperrdämpfung durch unterschiedliche optische Weglängen tritt bei der Plankonvexlinse im Gegensatz zur Kugellinse aus YIG bei der bekannten Anordnung der eingangs genannten Art kaum auf, denn die Plankonvexlinse ist nur auf einer Seite leicht gekrümmt. Mit der erfindungsgemäßen rückwirkungsfreien Anordnung lassen sich somit ebenso hohe Sperrdämpfungen erreichen, wie mit einer YIG-Scheibe.

Die Herstellung der Plankonvexlinse ist einfach, weil nur auf einer Seite des Ferrits eine Krümmung eingeschliffen werden muß. Aus der Form der Plankonvexlinse ergibt sich eine einfache Handhabung beim Einbau in den Ringmagneten.

Bevorzugterweise ist gemäß Anspruch 3 der Polarisator in Ausbreitungsrichtung der Laserstrahlung hinter dem Faradaydreher im konvergenten Bereich des Strahlengangs angeordnet. Wenn die zweite Linse eine Plankonvexlinse ist, kann in diesem Fall der Polarisator auf der ebenen Seite der Plankonvexlinse leicht an dieser Linse angebracht werden. Damit ist eine besonders kompakte Anordnung gegeben.

Die erste Linse kann aus einem Material mit einer Brechzahl kleiner als 2, beispielsweise aus Glas, bestehen und ist dann vorzugsweise gemäß Anspruch 4 in Form einer Kugellinse ausgebildet.

Die erste Linse kann auch aus einem Material mit einer Brechzahl gleich wie oder größer als 2, beispielsweise aus YIG oder Si, bestehen und ist dann vorzugsweise gemäß Anspruch 5 in Form einor Plankonvexlinse ausgebildet, wobei es hier zweckmäßig ist, wenn die ebene Seite dieser Plankonvexlinse dem Halbleiterlaser zugekehrt ist (Anspruch 6).

Vorteilhafterweise bilden die beiden Linsen gemäß Anspruch 7 ein teleskopisches System. Bei einem solchen teleskopisches System hängt der Abbildungsmaßstab nur vom Verhältnis der Brennweiten der beiden Linsen ab. Die Dimensionierung des Linsensystems ist daher besonders einfach. Bei den vorstehend genannten bekannten Anordnungen bilden die Linsen nur näherungsweise ein teleskopisches System.

Die mit der erfindungsgemäßen Anordnung erzielbare hohe Sperrdämpfung kann noch weiter erhöht werden, wenn ein weiterer Polarisator gemäß Anspruch 8 verwendet wird. Ein solcher Polarisator kann bei Halbleiterlasern, die auch gegen senkrecht zur Laserstrahlung polarisierte zurückstrahlende und nicht vorher abgeblockte Strahlung empfindlich sind, erforderlich sein. Dies ist beispielsweise bei einem DFB- und DSM-Laser der Fall.

Dieser weitere Polarisator wird aus Platzgründen zweckmäßigerweise zwischen der ersten Linse und dem Faradaydreher angeordnet (Anspruch 9).

Vorteilhafterweise besteht der weitere Polarisator gemäß Anspruch 10 aus einem unter einem Winkel schräg zur Ausbreitungsrichtung der Laserstrahlung angeordneten Interferenzpolarisator in Form einer dielektrischen Vielfachschicht. Wird der Einfallswinkel gleich dem Brewsterwinkel gewählt, kann der Interferenzpolarisator für die emittierte Laserstrahlung verlustfrei in den Strahlengang eingefügt werden. Dieser Polarisator verursacht keine Rückwirkung auf den Laser. Unter idealen Verhältnissen ist für die emittierte Laserstrahlung der Reflexionsfaktor des Polarisators null. Wenn dieser aber beispielsweise aufgrund von Justier- oder auch Fertigungsfehlern des Polarisators von null verschieden ist, wird die emittierte Laserstrahlung vom Polarisator nicht in Richtung des Lasers zurückreflektiert. Aus diesen Gründen eignet sich ein Interferenz-Polarisator generell hervorragend für rückwirkungsfreie optische Anordnungen mit optischem Isolator.

Der Halbleiterlaser und die erste Linse sind zweckmäßigerweise in einem hermetisch abgedichteten Gehäuse angeordnet. Der Halbleiterlaser ist so vor Umwelteinflüssen geschützt. Der weitere Polarisator bildet zweckmäßigerweise gemäß Anspruch 11 ein Fenster in dem Gehäuse. Der seitliche Versatz des Strahlengangs der Laserstrahlung durch den weiteren Polarisator ist nur gering und wirkt sich nicht störend aus.

Der in Ausbreitungsrichtung der Laserstrahlung hinter dem Faradaydreher angeordnete eine Polarisator kann wie beim Stand der Technik ein Calzitplättchen sein. Vorzugsweise ist dieser Polarisator jedoch gemäß Anspruch 12 ebenfalls ein InterferenzPolarisator, der zweckmäßigerweise gemäß Anspruch 13 in einen Block, beispielsweise Würfel aus einem für die Laserstrahlung transparenten Material eingebettet ist, der gemäß Anspruch 14 direkt mit einer Faser verbunden sein kann.

Die Rückwirkung des einen Polarisators auf den Halbleiterlaser ist sehr gering, weil dieser Polarisator in Ausbreitungsrichtung der Laserstrahlung hinter dem Faradaydreher und in vielen Anwendungsfällen auch in einem konvergenten Bereich des Strahlengangs angeordnet ist.

Interferenz-Polarisatoren lassen sich mit konstanter Qualität in großer Stückzahl in einem automatisierbaren Prozeß herstellen. Eine Entspiegelung braucht nicht vorgenommen zu werden. Damit ist der Interferenz-Polarisator einem Polarisator aus doppelbrechendem Kristallmaterial in seinen Eigenschaften und Herstellungskosten überlegen.

Die Erfindung wird anhand der Figuren in der folgenden Beschreibung beispielhaft näher erläutert. Von den Figuren zeigen:

Figur 1 in schematischer Darstellung eine Anorndung zum Einkoppeln der Laserstrahlung in eine Monomode-Faser und

Figur 2 in schematischer Darstellung eine ähnliche Anordnung wie in Figur 1, die einen weiteren Polarisator aufweist, der ein Fenster eines im Schnitt dargestellten Gehäuses für den Halbleiterlaser und die erste Linse bildet.

In den Figuren sind gleiche Teile mit gleichen Bezugszeichen bezeichnet.

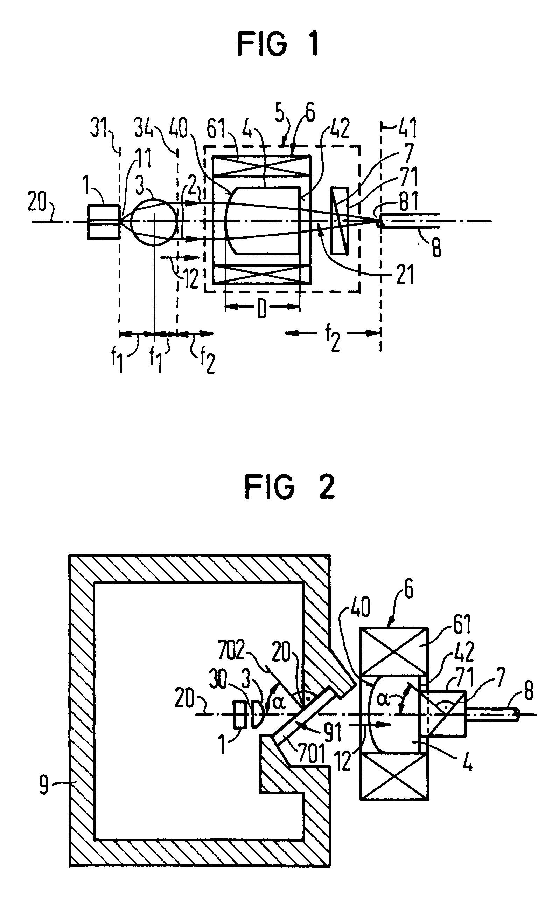

Bei der Anordnung nach Figur 1 sind auf einer optischen Achse 20 in einer bestimmten Richtung 12 hintereinander der Halbleiterlaser 1, beispielsweise eine Laserdiode, die erste Linse 3, beispielsweise eine Kugellinse aus Glas, der optische Isolator 5 und eine Monomodefaser 8 angeordnet.

Der Halbleiterlaser 1 ist relativ zur ersten Linse 3 so angeordnet, daß der Fleck 11 des Lasers, aus dem die Laserstrahlung austritt, in der objektseitigen Brennebene 31 auf der optischen Achse 20 angeordnet ist. Die vom Fleck 11 in der zur optischen Achse 20 parallelen bestimmten Richtung 12, der Ausbreitungsrichtung, divergent abgestrahlte Laserstrahlung wird dadurch von der ersten Linse 3 in ein in der Ausbreitungsrichtung 12 sich ausbreitendes Parallelstrahlenbündel umgeformt, das auf den optischen Isolator 5 trifft. Der Strahlengang der Laserstrahlung ist in der Figur 1 mit 2 bezeichnet.

Der optische Isolator 5 besteht aus dem Faradaydreher 6 in Form der von einem Ringmagneten 61 umgebenen Plankonvexlinse 4 aus Ferrit, beispielsweise YIG, und aus dem Polarisator 7, der in Ausbreitungsrichtung 12 hinter der Plankonvexlinse 4 angeordnet ist.

Die Plankonvexlinse 4 ist so angeordnet, daß ihre konvexe Seite 40 dem Halbleiterlaser 1 oder der ersten Linse 3 zugekehrt ist und daß ihre objektseitige Brennebene mit der bildseitigen Brennebene 34 der ersten Linse 3 zusammenfällt. Dadurch bilden die beiden Linsen 3 und 4 ein konfokales System oder teleskopisches System, das den Fleck 11 auf die bildseitige Brennebene 41 der Plankonvexlinse 4 abbildet. An der Stelle des Bildes des Flecks 11 ist ein Ende 81 einer Monomodefaser 8 angeordnet, in welche die Laserstrahlung eingekoppelt wird.

Der Interferenz-Polarisator 7, der aus einer im Winkel schräg zur optischen Achse 20 angeordneten und in einen Block 71 aus Glas eingebetteten dielektrischen Vielfachschicht besteht, ist zwischen der Plankonvexlinse 4 und der Faser 8 und damit zwangsläufig im konvergenten Bereich 21 des Strahlengangs 2 der Laserstrahlung angeordnet.

Der Polarisator 7 kann auf der planen Seite 42 an der Plankonvexlinse 4 angebracht und/oder direkt mit der Faser 8 verbunden sein.

Die Dicke D der Plankonvexlinse 4 ist so gewählt, daß eine Faradaydrehung um 45° bewirkt wird. Diese Dicke D kann unabhängig von der Brennweite $f_2$ der Plankonvexlinse 4 gewählt werden.

Für einen maximalen Einkoppelwirkungsgrad der Laserstrahlung in die Faser 8 muß der Fleckradius des Flecks 11 in einen Fleckradius transformiert werden, der dem Fleckradius der Faser 8 entspricht. Bei dem konfokalen System ist der Abbildungsmaßstab, d.h. das Verhältnis zwischen dem Fleckradius der Faser und dem Fleckradius des Flecks 11, direkt durch das Verhältnis zwischen der Brennweite $f_2$ der zweiten Linse 4 und der Brennweite $f_1$ der ersten Linse 3 gegeben. Für eine Kopplung zwischen Halbleiterlaser 1 und Monomodefaser 8 liegt der Abbildungsmaßstab im Bereich von 4 bis 5. Entsprechend ist das Verhältnis zwischen den genannten Brennweiten zu wählen.

Um bei der ersten Linse 3 Ankoppelverluste durch Aberration so gering wie möglich zu halten, sollte deren Radius klein und deren Brechzahl möglichst groß sein.

Bei einem Ausführungsbeispiel einer Anordnung nach Figur 1 für eine Laserstrahlung von 1,3 μm Wellenlänge wurde eine Kugellinse aus Glas mit einem Brechungsindex von 1,818 und einem Radius von 0,5 mm gewählt. Die Brennweite $f_1$ dieser Kugellinse betrug danach 0,556 mm. Wegen des durch die Laserdiode 1 und die Monomodefaser 8 vorgegebenen Abbildungsmaßstabes von 4 bis 5 ist die Brennweite $f_2$ der Plankonvexlinse 4 auf 2,224 bis 2,780 mm festgelegt. Bei der gegebenen Wellenlänge beträgt die Brechzahl der Plankonvexlinse 4 aus YIG 2,2. Danach muß der Radius der gewölbten Seite 40 der Plankonvexlinse 4 auf 2,67 bis 3,34 mm gewählt werden, um die richtige Brennweite zu erzielen. Um bei der angegebenen Wellenlänge eine Faradaydrehung um 45° zu erzielen, muß die Dicke D der Plankonvexlinse 4 etwa 2 mm gewählt werden.

Die Anordnung nach Figur 2 unterscheidet sich von der Anordnung nach Figur 1 im wesentlichen dadurch, daß zwischen der ersten Linse 3, die hier beispielsweise eine Plankonvexlinse mit einer dem Halbleiterlaser 1 zugekehrten ebenen Seite 30 ist, und dem Faradaydreher 6 ein weiterer Polarisator 70 angeordnet ist, der ein Fenster 91 in einem dem Halbleiterlaser 1 enthaltenden Gehäuse 9 bildet. Der weitere Polarisator 70 ist als Interferenz-Polarisator, beispielsweise in Form einer dielektrischen Vielfachschicht auf einem Glasplättchen 701 ausgebildet, das am Gehäuse 9 fixiert ist. Dieser Polarisator 70 ist unter einem Winkel schräg zur Ausbreitungsrichtung 12 der Laserstrahlung angeordnet, der so gewählt ist, daß der zum Lot 702 des Polarisators 70 gemessene Einfallswinkel $\alpha$ gleich dem Brewsterwinkel ist. Wie bei der Anordnung nach Figur 1 besteht auch bei dieser Anordnung nach Figur 2 der eine Polarisator 7 aus einer in einen Block 7 eingebetteten dielektrischen Vielfachschicht, die vorzugsweise in einem Winkel zur Achse 20 geneigt ist, daß der Einfallswinkel $\alpha$ gleich dem Brewsterwinkel ist. Der Block 71 ist an der Plankonvexlinse 4 auf deren planen Seite 42 angebracht und außerdem direkt mit der Faser 8 verbunden.

## Patentansprüche

1. Rückwirkungsfreie optische Anordnung zum Umwandeln der von einem Halbleiterlaser (1) divergent abgestrahlten polarisierten Laserstrahlung in eine weniger oder nicht divergente Strahlung, insbesondere in eine konvergente Strahlung, insbesondere zum rückwirkungsfreien Einkoppeln der Laserstrahlung in eine Monomodefaser, wobei im Strahlengang (2) der Laserstrahlung eine erste optische Linse (3) und eine in Ausbreitungsrichtung (12) der Strahlung hinter der ersten Linse (3) befindliche zweite optische Linse (4) angeordnet sind, wobei ein optischer Isolator (5), der aus einem Faraday-Dreher (6) und zumindest einem Polarisator (7) besteht, im Strahlengang (2) vorgesehen ist und eine der beiden Linsen (3,4) im magneto-optischen Material des Faraday-Drehers gebildet ist, dadurch gekennzeichnet, daß von den beiden Linsen (3,4) nur die zweite Linse (4) im magneto-optischen Material des Faraday-Drehers (6) gebildet ist.

2. Anordnung nach Anspruch 1, dadurch gekennzeichnet, daß die zweite Linse (4) aus einer Plankonvexlinse besteht, deren gewölbte Seite (40) dem Halbleiterlaser (1) zugekehrt ist.

3. Anordnung nach Anspruch 1 oder 2, dadurch gekennzeichnet, daß der Polarisator (7) in Ausbreitungsrichtung (12) der Laserstrahlung hinter dem Faraday-Dreher (6) angeordnet ist.

4. Anordnung nach einem der vorhergehenden Ansprüche, dadurch gekennzeichnet, daß die erste Linse (3) aus einem Material mit einer Brechzahl kleiner als 2 besteht und in Form einer Kugellinse ausgebildet ist.

5. Anordnung nach einem der Ansprüche 1 bis 3, dadurch gekennzeichnet, daß die erste Linse (3) aus einem Material mit einer Brechzahl gleich wie oder größer als 2 besteht und in Form einer Plankonvexlinse ausgebildet ist.

6. Anordnung nach Anspruch 5, dadurch gekennzeichnet, daß die ebene Seite der als Plankonvexlinse ausgebildeten ersten Linse (3) dem Halbleiterlaser (1) zugekehrt ist.

7. Anordnung nach einem der vorhergehenden Ansprüche, dadurch gekennzeichnet, daß die beiden Linsen (3, 4) ein teleskopisches System bilden.

8. Anordnung nach einem der vorhergehenden Ansprüche, dadurch gekennzeichnet, daß zwischen dem Halbleiterlaser (1) und dem Faradaydreher (6) ein weiterer Polarisator (70) im Strahlengang (2) der Laserstrahlung angeordnet ist.

9. Anordnung nach Anspruch 8, dadurch gekennzeichnet, daß der weitere Polarisator (70) zwischen der ersten Linse (3) und dem Faradaydreher (6) angeordnet ist.

10. Anordnung nach Anspruch 8 oder 9, dadurch gekennzeichnet, daß der weitere Polarisator (70) aus einem unter einem Winkel schräg zur Ausbreitungsrichtung (12) der Laserstrahlung angeordneten Interferenz-Polarisator besteht.

11. Anordnung nach einem der Ansprüche 8 bis 10, dadurch gekennzeichnet, daß der weitere Polarisator (70) ein Fenster (91) in einem den Halbleiterlaser (1) enthaltenden Gehäuse (9) definiert.

12. Anordnung nach einem der vorhergehenden Ansprüche, dadurch gekennzeichnet, daß der eine Polarisator (5) ein Interferenz-Polarisator ist.

13. Anordnung nach Anspruch 3 und 12, dadurch gekennzeichnet, daß der eine Polarisator (7) in einem Block (71) aus einem für die Laserstrahlung transparenten Material eingebettet ist.

14. Anordnung nach Anspruch 13, dadurch gekennzeichnet, daß der Block (71) direkt mit einer Faser (8) verbunden ist.

15. Anordnung nach Anspruch 2 und 3, oder nach Anspruch 2 und 3 und einem der Ansprüche 4 bis 14, dadurch gekennzeichnet, daß der eine Polarisator (7) an der Plankonvexlinse (4) auf deren planen Seite (42) angebracht ist.

16. Anordnung nach Anspruch 15, dadurch ge-

**kennzeichnet,** daß der eine Polarisator (7) mit einer Faser (8) verbunden ist.

## Claims

1. Feedback-free optical arrangement for converting the divergently emitted polarised laser emission from a semiconductor laser (1) into emission that is less or not divergent, preferably into convergent emission, preferably for the feedback-free injection of the laser emission into a monomode fibre, there being arranged in the beam path (2) of the laser emission a first optical lens (3) and a second optical lens (4) located behind the first lens (3) in the direction of propagation (12) of the emission, an optical isolator (5), which consists of a Faraday rotator (6) and at least one polariser (7), being provided in the beam path (2), and one of the two lenses (3, 4) being formed in the magneto-optic material of the Faraday rotator, characterised in that, of the two lenses (3, 4), only the second lens (4) is formed in the magneto-optic material of the Faraday rotator (6).

2. Arrangement according to Claim 1, characterised in that the second lens (4) consists of a plano-convex lens whose curved side (40) faces the semiconductor laser (1).

3. Arrangement according to Claim 1 or 2, characterised in that the polariser (7) is arranged downstream of the Faraday rotator (6) in the direction (12) of propagation of the laser emission.

4. Arrangement according to one of the preceding claims, characterised in that the first lens (3) consists of a material having a refractive index of less than 2 and is constructed in the form of a spherical lens.

5. Arrangement according to one of Claims 1 to 3, characterised in that the first lens (3) consists of a material having a refractive index equal to or greater than two and is constructed in the form of a plano-convex lens.

6. Arrangement according to Claim 5, characterised in that the planar side of the first lens (3), constructed as a plano-convex lens, faces the semiconductor laser (1).

7. Arrangement according to one of the preceding claims, characterised in that the two lenses (3, 4) form a telescopic system.

8. Arrangement according to one of the preceding claims, characterised in that a further polariser (70) is arranged between the semiconductor laser (1) and the Faraday rotator (6) in the beam path (2) of the laser emission.

9. Arrangement according to Claim 8, characterised in that the further polariser (70) is arranged between the first lens (3) and the Faraday rotator (6).

10. Arrangement according to Claim 8 or 9, characterised in that the further polariser (70) consists of an interference polariser arranged at an oblique angle relative to the direction (12) of propagation of the laser emission.

11. Arrangement according to one of Claims 8 to 10, characterised in that the further polariser (70) defines a window (91) in a housing (9) containing the semiconductor laser (1).

12. Arrangement according to one of the preceding claims, characterised in that one polariser (7) is an interference polariser.

13. Arrangement according to Claims 3 and 12, characterised in that one polariser (7) is embedded in a block (71) made from a material transparent to the laser emission.

14. Arrangement according to Claim 13, characterised in that the block (71) is directly connected to a fibre (8).

15. Arrangement according to Claims 2 and 3, or according to Claims 2 and 3 and one of Claims 4 to 14, characterised in that one polariser (7) is affixed to the plano-convex lens (4) on the planar side (42) thereof.

16. Arrangement according to Claim 15, characterised in that one polariser (7) is connected to a fibre (8).

## Revendications

1. Dispositif optique sans rétroaction pour convertir un rayonnement laser polarisé divergent émis par un laser à semiconducteurs (1), en un rayonnement moins ou non divergent, notamment en un rayonnement convergent, notamment pour l'injection, par couplage et sans rétroaction, du rayonnement laser dans une fibre monomode, et dans lequel une première lentille optique (3) et une seconde lentille optique (4), située en aval de la première lentille (3) dans la direction de propagation (12) du rayonnement, sont disposées dans le trajet (2) du rayonnement laser, et dans lequel un isolateur optique (5), qui est constitué par un rotateur de Faraday (6) et par au moins un polariseur (7), est prévu dans le trajet (2) du rayonnement et l'une des deux lentilles (3,4) est réalisée avec le matériau magnéto-optique du rotateur de Faraday, caractérisé par le fait que parmi les deux lentilles (3, 4), seule la seconde lentille (4) est formée avec le matériau magnéto-optique du rotateur de Faraday (6).

2.  Dispositif suivant la revendication 1, caractérisé par le fait que la seconde lentille (4) est constituée par une lentille plan-convexe, dont la face cintrée (40) est tournée vers le laser à semiconducteurs (1).

3.  Dispositif suivant la revendication 1 ou 2, caractérisé par le fait que le polariseur (7) est disposé en aval du rotateur de Faraday (6), dans la direction de propagation (12) du rayonnement laser.

4.  Dispositif suivant l'une des revendications précédentes caractérisé par le fait que la première lentille (3) est réalisée en un matériau possédant un indice de réfraction inférieur à 2 et est agencée sous la forme d'une lentille sphérique.

5.  Dispositif suivant l'une revendications 1 à 3, caractérisé par le fait que la première lentille (30) est réalisée en un matériau possédant un indice de réfraction égal ou supérieur à 2 et est agencée sous la forme d'une lentille plan-convexe.

6.  Dispositif suivant la revendication 5, caractérisé par le fait que la face plane de la première lentille (3) réalisée sous la forme d'une lentille planconvexe est tournée vers le laser à semiconducteurs (1).

7.  Dispositif suivant l'une des revendications précédentes, caractérisé par le fait que les deux lentilles (3,4) forment un système télescopique.

8.  Dispositif suivant l'une des revendications précédentes, caractérisé par le fait qu'un autre ou second polariseur (70) est disposé entre le laser à semiconducteurs (1) et le rotateur de Faraday (6), dans le trajet (2) du rayonnement laser.

9.  Dispositif suivant la revendication 8, caractérisé par le fait que l'autre polariseur (70) est disposé entre la première lentille (3) et le rotateur de Faraday (6).

10. Dispositif suivant la revendication 8 ou 9, caractérisé par le fait que l'autre polariseur (70) est constitué par un polariseur interférentiel, qui est disposé obliquement, sous un certain angle, par rapport à la direction de propagation (12) du rayonnement laser.

11. Dispositif suivant l'une des revendications 8 à 10, caractérisé par le fait que l'autre polariseur (70) définit une fenêtre (91) dans un boîtier (9) contenant le laser à semiconducteurs (1).

12. Dispositif suivant l'une des revendications précédentes, caractérisé par le fait que le polariseur (5) est un polariseur interférentiel.

13. Dispositif suivant les revendications 3 et 12, caractérisé par le fait que le polariseur (7) est logé dans un bloc (71) formé d'un matériau transmettant le rayonnement laser.

14. Dispositif suivant la revendication 13, caractérisé par le fait que le bloc (71) est raccordé directement à une fibre (8).

15. Dispositif suivant les revendications 2, 3 ou suivant les revendications 2 et 3 ou l'une des revendications 4 à 14, caractérisé par le fait que le polariseur (7) est disposé sur la face plane (42) de la lentille plan-convexe (4).

16. Dispositif suivant la revendication 15, caractérisé par le fait que le polariseur (7) est raccordé à une fibre (8).

EP 0 275 068 B1

# FIG 1

# FIG 2